(19) Europäisches Patentamt
European Patent Office
Office européen des brevets

(11) EP 1 180 852 A1

(12) # EUROPEAN PATENT APPLICATION
published in accordance with Art. 158(3) EPC

(43) Date of publication:
**20.02.2002 Bulletin 2002/08**

(21) Application number: **01908269.2**

(22) Date of filing: **02.03.2001**

(51) Int Cl.[7]: **H04B 1/707**, G06F 17/15

(86) International application number:
**PCT/JP01/01643**

(87) International publication number:
**WO 01/65716 (07.09.2001 Gazette 2001/36)**

(84) Designated Contracting States:
**AT BE CH CY DE DK ES FI FR GB GR IE IT LI LU MC NL PT SE TR**

(30) Priority: **02.03.2000 JP 2000056961**

(71) Applicant: **Kawasaki Steel Corporation**
**Kobe-shi, Hyogo 651-0075 (JP)**

(72) Inventor: **TAKENOBU,S.**
**Tokyo Head Office, Kawasaki Steel Corp**
**Chiyoda-ku, Tokyo 100-0011 (JP)**

(74) Representative: **Stebbing, Timothy Charles et al**
**Haseltine Lake & Co., Imperial House, 15-19 Kingsway**
**London WC2B 6UD (GB)**

(54) **SLIDING CORRELATOR AND SLIDING CORRELATING METHOD**

(57) A sliding correlator in a spread spectrum receiving apparatus includes arithmetic device for calculating a correlation value between a data sequence and a correlation coefficient sequence, and decision device for deciding whether a succession of the same coefficients exists in the correlation coefficient sequence. The arithmetic device carries out a calculation in accordance with the result of decision made by the decision device.

Further, a sliding correlation method in a receiver in a spread spectrum communication system decides whether a succession of the same coefficients exists in a correlation coefficient sequence, and calculates a correlation value between a data sequence and a correlation coefficient sequence in accordance with the result of the decision.

The sliding correlator and the sliding correlation method permit obtaining correlation values similar to those obtained by the use of any conventional sliding correlator and is capable of reducing integrating power consumption by decreasing the number of calculations.

FIG.1

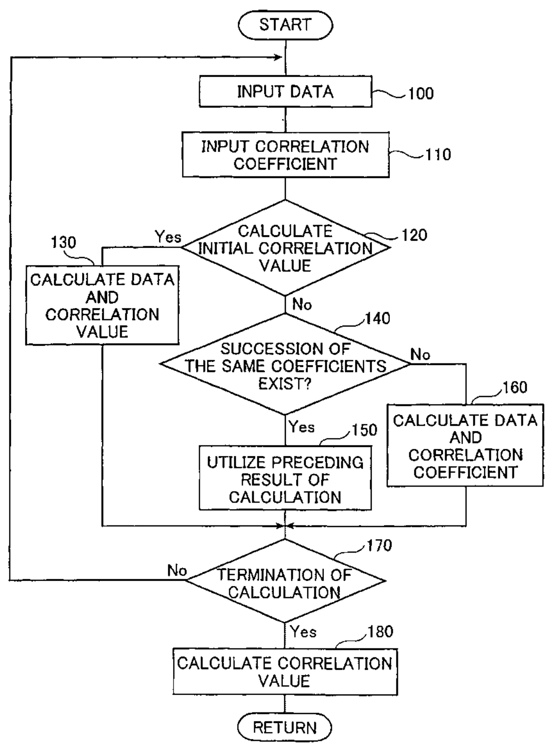


EP 1 180 852 A1

## Description

Technical Field

The present invention relates to a sliding correlator and a sliding correlation method in a receiver in a spread spectrum communication system.

Background Art

A spread spectrum communication system has been utilized in recent years for land mobile communication. This is a system in which data signals to be sent from a transmitting side are multiplied by spreading codes so that the data signal is spreading out a wide frequency band before being transmitted by converting the band that the signal has to a wider band. On the other hand, a receiving side uses the same code as that on the transmitting side to restore the original band of the signal for demodulating purpose. A pseudo noise (PN) sequence is used as the spread code at this time. In other words, the receiving side uses the same PN sequence as what has been employed for transmission to take a correlation of the data signal with the PN sequence so as to detect a correlation peak for synchronous acquisition and holding and to carry out demodulation by means of the correlation detection.

Thus, a sliding correlator is often used for the synchronous acquisition of the receiver in the spread spectrum communication system. The sliding correlator is a circuit for evaluating which part of a data sequence has a greater correlation by multiplying an input data sequence having a fixed length by a correlation coefficient (a spreading code).

Fig. 8 shows a schematic configuration of a conventional sliding correlator. A sliding correlator 90 shown in Fig. 8 comprises a delay circuit 92, correlation integrators 94 and a comparator 96.

A fixed data sequence a1, a2, ..., aN is fed into the sliding correlator 90. A coefficient sequence correlating to the data sequence is assumed to be b1, b2, ..., bM. The correlation coefficient sequence is determined by what data correlates to the data sequence and generally the data sequence is longer than the correlation coefficient sequence, that is, N > M.

The data sequence a1, ..., aN is fed into the delay circuit 92 in sequence. N - M + 1 of the multiplexed correlation integrators 94 are connected to the delay circuit 92 and a correlation coefficient sequence b1, ..., bM is fed into each of the correlation integrators 94.

The initial M of data a1, ..., aM out of the data sequence a1, ..., aN output from the delay circuit 92 are fed into the first correlation integrator 94 and are multiplied by the correlation coefficients b1, ..., bM to calculate a correlation value P1 as indicated by the following equation (1):

$$P1 = b1 \times a1 + b2 \times a2 + ... + bM \times aM \qquad (1)$$

The next M of data a2,..., aM+1 out of the data sequence a1, ..., aN output from the delay circuit 92 are fed into the second correlation integrator 94 and are multiplied by the correlation coefficients b1, ... bM to calculate a correlation value P2 as indicated by the following equation (2):

$$P2 = b1 \times a2 + b2 \times a3 + ... + bM \times aM+1 \qquad (2)$$

Similarly, the last M of data aN-M+1, ..., aN out of the data sequence a1, ..., aN are fed into the N - M + 1th correlation integrator 94 and are multiplied by the correlation coefficients b1, ... bM to calculate a correlation value PN -M + 1 as indicated by the following equation (3):

$$PN\text{-}M+1 = b1 \times aN\text{-}M+1 + b2 \times aN\text{-}M+2 + ... + bM \times aN \qquad (3)$$

N - M + 1 of the correlation values P1, P2,...,PN - M + 1 output from the respective correlation integrators 94 are fed into the comparator 96, so that the greatest absolute value, that is, a peak value R of the correlation value is detected as max {Pk} or min {Pk} (where k = 1,..., N - M + 1) when its sign is taken into consideration.

As shown in Fig. 9, for example, the above-described correlation integrator 94 comprises a multiplier 94a, an adder 94b and a storage element 94c and is used to calculate a correlation value Pk by carrying out calculations of the equations (1) - (3).

More specifically, data ai fed from the delay circuit 92 is multiplied by a correlation coefficient bj in the multiplier 94a to calculate the product bj x ai. On the other hand, the value already calculated is stored in the storage element 94c. The calculated result stored in the storage element 94c is fed back and added to the product bj x ai in the adder 94b and this result is newly stored in the storage element 94c. This process is repeated M times (j = 1,..., M) and then the correlation value Pk is calculated before being output.

However, because the correlation integrators are multiplexed in the conventional sliding correlator above, the problem is that the circuit area becomes larger with greater power consumption to that extent.

On the other hand, it is conceivable to provide one correlation integrator whereby to make the same calculation as what has been described above with respect to the same data sequence while changing the correlation coefficient. Then a comparison is made therebetween each time one result of addition is produced and the circuit area can be reduced according to this method. However, the power consumption used to make additions until the final result is produced still remains unchanged from the above-described case of multiplexing the correlation integrators. Thus, there is also developed a problem arising from high power consumption.

## DISCLOSURE OF THE INVENTION

An object of the present invention made in view of the foregoing conventionally-raised problems is to provide a sliding correlator and a sliding correlation method that permit obtaining correlation values similar to those obtained by the use of any conventional sliding correlator and is capable of reducing power consumption by decreasing the number of calculations.

The present invention provides a sliding correlator in a spread spectrum receiving apparatus, comprising an arithmetic device for calculating a correlation value of data sequence with correlation coefficient sequence, and a decision device for deciding whether a succession of the same consecutive coefficients exists in the correlation coefficient sequence. The arithmetic device is characterized by carrying out calculations in accordance with the result of the decision made by the decision device. In this case, the arithmetic device preferably carries out the calculation by utilizing the previous result of calculation. In case where the decision device decides that a succession of the same consecutive coefficients exists in the correlation coefficient sequence, the arithmetic device is arranged so as not to make any calculation with respect to the part where the same consecutive coefficients exist in the correlation coefficient sequence.

Moreover, the arithmetic device preferably carries out calculations by fixing the data sequence and looping of the correlation coefficient sequence. The decision device preferably includes an exclusive OR that inputs each of the consecutive coefficients and decides whether the adjoining coefficients are the same.

The present invention also provides a sliding correlation method in a receiver in a spread spectrum communication system, which method is characterized by deciding whether a succession of the same coefficients exists in a correlation coefficient sequence and calculating a correlation value of data sequence with correlation coefficient sequence in accordance with the result of the decision made.

## BRIEF DESCRIPTION OF THE DRAWINGS

Fig. 1 is a flowchart showing a processing flow in a sliding correlation method according to the present invention.

Fig. 2 is a block diagram showing the basic principle of the sliding correlation method according to the invention.

Fig. 3 is a schematic block diagram of a sliding correlator in a first embodiment of the invention.

Fig. 4 is a flowchart showing a processing flow in a sliding correlation method in a second embodiment of the invention.

Fig. 5 is a schematic block diagram of a sliding correlator in a second embodiment of the invention.

Fig. 6 is a diagram descriptive of another calculation method.

Fig. 7 is a diagram descriptive of still another calculation method.

Fig. 8 is a schematic block diagram of a conventional sliding correlator.

Fig. 9 is a schematic block diagram of the correlation integrator of Fig. 8.

## BEST MODE FOR CARRYING OUT THE INVENTION

A sliding correlator and a sliding correlation method according to the present invention will now be described in detail with reference to the accompanying drawings.

The present invention is intended to obtain correlation values similar to those obtained by the use of any conventional sliding correlator and to reduce the power consumption of a sliding correlator by decreasing the number of calculations as much as possible.

By using a specific example of calculation, the basic principle of a sliding correlation method according to the invention will be described. As a premise, a correlation coefficient is composed of only +1 and -1. Therefore, a calculation of the product and sum of a data sequence and a correlation coefficient sequence only results actually from simply adding data, subtracting one from another and the repetition of this step.

As a specific example, the length of a correlation coefficient sequence is assumed 10 with respect to the data sequence a1, a2, ..., aN whereby to set the correlation coefficient sequence as (b1, b2, ..., b10) = (0, 1, 1, 1, 0, 1, 0, 1, 0, 0). Incidentally, the length N of the data sequence is greater than the length of the correlation coefficient sequence and N > 10. Though the correlation coefficient sequence comprises each one bit of $\phi$ and 1 as a code (a spreading code), the code 0 represents + 1 and the code 1 represents -1 from the view point of numerical value calculation.

Consequently, the initial correlation value P1 is calculated as indicated by the following equation (4):

$$P1 = b1 \times a1 + b2 \times a2 + ... + b10 \times a10$$

$$= a1 - a2 - a3 - a4 + a5 - a6 + a7 - a8 + a9 + a10 \quad (4)$$

On the contrary, the next correlation value P2 is calculated by one-data offsetting and multiplying the correlation coefficient as indicated by the following equation (5):

$$P2 = b1 \times a2 + b2 \times a3 + ... + b10 \times a11$$

$$= a2 - a3 - a4 - a5 + a6 - a7 + a8 - a9 + a10 + a11 \quad (5)$$

In comparison of the calculated result of P2 with that of P1, P2 can be expressed by the following equation (6):

$$P2 = P1 - a1 + 2x\,(a2 - a5 + a6 - a7 + a8 - a9) + a11 \quad (6)$$

In this case, the number of calculations in the calculating equation (4) of P1 shown above is 10 times. In the calculating equation (6) of P2, on the other hand, the number of calculations does not increase but remains to be 8 times because the part in front of the parenthesis, 2X, is equivalent to one-bit shift in digital calculation. Therefore, the number of calculations can be decreased by twice in comparison with the equation of (4) by following the equation of (6) for calculating purpose.

A decrease of twice in the number of calculations is due to the fact that in the correlation coefficient sequence, there exist in at least two places of (1, 1, 1) and (0, 0) where the same coefficients occur in succession.

According to the basic principle of the invention above-mentioned, in order to decide whether the same coefficients continuously exist in the correlation coefficient sequence, a signal indicative of whether the adjoining coefficients are the same is generated to decide whether it is needed to carry out an addition, a subtraction or no calculation by the use of the signal. Thus, the power consumption of the sliding correlator can be reduced by decreasing the number of calculations.

First, a sliding correlation method as a first embodiment of the invention will be described with reference to a flowchart of Fig. 1.

Data ai (I = 1, 2,..., N) is fed in at Step 100 and a correlation coefficient bj (j = 1, 2,..., M) is fed in at Step 110. At Step 120, a decision is made on whether an initial correlation value has been calculated. In case of a calculation of the initial correlation value, the data is multiplied by the correlation coefficient at Step 130 and the method proceeds to Step 170 at which a decision is made whether the calculation of all the coefficients bj has been terminated. In case where the calculation has not been terminated, the method returns to Step 100 and the next data and the next coefficient are input and multiplied to add to a previous value. When the initial correlation value is thus calculated, the calculated result is stored and the next correlation value is calculated.

In case of a decision that the calculation is not the initial correlation value at Step 120, the equation (6) is basically used to calculate the correlation value. In other words, a decision is made on whether a succession of the same coefficients exists in the correlation coefficient sequence at Step 140. In case where the succession of the same coefficients exists, no calculations are made at Step 150 and the preceding result of calculation is utilized (e.g., a3, a4, a10 and so forth in the equation (6)).

Further, in case where the succession of the same coefficients does not exist at Step 140, the data is multiplied by the correlation coefficient like the calculation of the initial correlation value at Step 160 (e.g., the calculation of terms other than the above-described terms in the equation (6)).

When a decision is made on the completion of the calculation of all of the data and correlation coefficients at Step 170, the correlation value is calculated at Step 180. Then the correlation value thus calculated indicates a correlation peak when the correlation is detected and synchronous acquisition is carried out.

Fig. 2 shows one of the principal parts of a sliding correlator used to make the calculation of correlation values in the sliding correlation method according to the invention as described above.

In Fig. 2, a sliding correlator 1 includes a delay element 2, and an XOR (exclusive-OR) circuit 3, an arithmetic circuit 4 and a storage element 5. The data sequence ai (i = 1,..., N) is fed into the arithmetic circuit 4. On the other hand, the correlation coefficient bj (j = 1,..., M, however, N > M) via the delay element 2 and the next correlation coefficient bj + 1 is fed into the XOR circuit 3 and the XOR circuit outputs a signal DIF indicative of whether a succession of the same coefficients exists. Initially, P' = a1 x b1 +...+ aM x bM is calculated and then the calculated result is stored in the storage element 5 before being fed back into the arithmetic circuit 4.

As is well known, the XOR circuit 3 outputs 1 when the coefficient bj is different from bj + 1 and outputs 0 when both are the same. In other words, in case where the succession of the same coefficients exists, DIF = 0 and when the adjoining coefficients are different from each other, DIF = 1 is established.

When DIF = 0, the arithmetic circuit 4 carries out no calculations, and when DIF = 1 and the actual value of the coefficient bj = 1 (i.e, bj = 0 as a code), the arithmetic circuit 4 carries out a calculation using the following equation (7):

$$ai' = P' + 2 \times ai \qquad (7)$$

Further, when the actual value of the coefficient bj = -1 (i.e, bj = 1 as a code), the arithmetic circuit 4 carries out a calculation using the following equation (8):

$$ai' = P' - 2 \times ai \qquad (8)$$

The data ai' after the calculation is stored in the storage element 5, fed back into the arithmetic circuit 4 and utilized for the next calculation, so that the correlation value P' is ultimately output.

Fig. 3 is a schematic block diagram of a specific sliding correlator in a first embodiment of the invention.

Fig. 3 shows the principal part of the sliding correlator as a correlation-value calculating part in the first embodiment of the invention. As shown in Fig. 3, the sliding correlator 10 according to this embodiment of the invention includes flip-flops 12, 20 and 28, an adder 14, a subtracter 16, a multiplexer 18, an XOR circuit 22, an AND circuit 26 and a shifter 24.

The newly-fed data ai is fed from the flip-flop 12 into the adder 14 and the subtracter 16 and calculated with the calculated data that has already been fed back. In this case, the use of either adder 14 or subtracter 16 is determined by the multiplexer 18 with the correlation coefficient bj fed from the flip-flop 20 as a selective control signal. The output of the multiplexer 18 is shifted by the shifter 24; the output thereof is not shifted whenj = 1 or M (M is the length of the correlation coefficient sequence) but shifted in only any other case.

The correlation coefficient bj delayed via the flip-flop 20 and the next correlation coefficient bj + 1 are fed into the XOR circuit 22 and the signal DIF indicative of whether a succession of the same coefficients exists is generated. This signal DIF and a clock signal CLK are fed into the AND circuit 26 and the operation of the flip-flop 28 is controlled by the output of the AND circuit 26.

Thus, the calculation shown in the equation (6) is carried out and the number of calculations is decreased whereby to achieve a reduction in the power consumption of the sliding correlator.

A second embodiment of the invention will now be described.

First, a sliding correlation method according to the second embodiment of the invention will be described with reference to a flowchart of Fig. 4. This method refers to a case where the length N of the data sequence a1, ..., aN is equal to the length M of the correlation coefficient sequence b1, ..., bM (N = M) wherein correlation coefficients are looped in turn and added up to the data. With N = 9, for example, a description will be given.

At Step 200, a correlation coefficient sequence is fed in first. The correlation coefficient sequence (as a code) is set to (1, 0, 1, 1, 0, 1, 1, 0, 1). In other words, it is assumed that the actual value of the correlation coefficient includes -1, 1, -1, -1, 1, -1, -1, 1, -1. A data sequence is then fed in at Step 210. The data sequence is assumed to be a1, ..., a9. At Step 220, a decision is made on whether the calculation of the initial correlation value is applied. In case where the initial correlation value is calculated, the initial correlation value P1 is calculated according to the following equation (9) by multiplying the data directly by the correlation coefficient at Step 230.

$$P1 = -a1 + a2 - a3 - a4 + a5 - a6 - a7 + a8 - a9 \qquad (9)$$

Based on the decision made at Step 280, a decision is made on whether the calculation of the whole data (the whole correlation coefficient) has been terminated after the looping of the correlation coefficients is completely terminated. In case where the calculation of whole data is not terminated, the method returns to Step 240 and the correlation coefficient sequence bj is shifted by one to the right. Consequently, the extreme right-side coefficient -1 moves to the extreme left, so that the actual values of the correlation coefficients are arranged in the order of -1, -1, 1, -1, -1, 1, -1, -1, 1.
At Step 250, further, a decision is made on whether a succession of the same coefficients exists. In case where the succession of the same coefficients exists, the preceding result of calculation of the correlation value is utilized for the calculation of a correlation value at step 260.
More specifically, if the calculation is carried out conventionally, a data sequence a1, ..., a9 is multiplied by the shifted coefficient, whereby P2 is obtained by the following equation (10):

$$P2 = -a1 - a2 + a3 - a4 - a5 + a6 - a7 - a8 + a9 \qquad (10)$$

In conclusion, the following equation (11) is explicitly established by comparing the equations (9) and (10).

$$P2 = P1 + 2 \times (-a2 + a3 - a5 + a6 - a8 + a9) \qquad (11)$$

P1 as the preceding result of calculation is used to calculate the second correlation value P2 by the use of the equation (11) in this embodiment of the invention.
In this case, though the number of calculations is 9 times when P2 is calculated conventionally as in the equation (10), the number of calculations comes up to 6 times when P2 is calculated by utilizing the preceding result of calculation as in the equation (11), whereby the number of calculations can be decreased by 3 times.
This is because there are three places where the same correlation coefficients continuously exist including 1, 1 in the mid-portion and those other than 1, 1 as both ends are linked.
In case where the same coefficients do not exist, moreover, the calculation of simply multiplying the data by the correlation coefficient is carried out at Step 270.
Subsequently at Step 280, a decision is made on whether the shifting (looping) of the correlation coefficient sequence is back where it has been started and whether the shifting thereof has been terminated. In case where the shifting of the correlation coefficient sequence is decided to be unterminated yet, the method returns to Step 240 and shifts the correlation coefficient sequence whereby to make the calculation of the next correlation value. When the shifting is completely terminated and when the calculation is terminated, the correlation value is calculated at step 290. When the correlation value thus calculated proves a correlation, a correlation peak is indicated and synchronous acquisition is realized by detecting the correlation peak.
Fig. 5 shows an example of a circuit comprising a sliding correlator for implementing the sliding correlation method according to the second embodiment of the invention.
A sliding correlator 30 of Fig. 5 according to this embodiment of the invention mainly includes an adder 32, a subtracter 34, a multiplexer 36, a circuit 38 for holding correlation sequence, a circuit 40 for holding one preceding correlation coefficient, an XOR circuit 42, an AND circuit 44 and a flip-flop 46.
Data ai is fed into the adder 32 and the subtracter 34 and selectively used in the multiplexer 36 as in the first embodiment of the invention. This is determined by a signal DIF, generated in the XOR circuit 42, for showing whether the correlation coefficient sequence 38 and next correlation coefficient sequence 40 contain a succession of the same coefficients. In this case, this sliding correlator is different from one in the first embodiment of the invention in that the correlation coefficient is looped. The signal DIF and a clock signal CLK is fed into the AND circuit 44 and the output of the AND circuit 44 is fed into the flip-flop 46, whereby to decide whether the output thereof is fed back.
However, there are various cases other than what has been described above as long as the way to prove a correlation with respect to data is concerned.
As shown in Fig. 6, for example, there are cases where a correlation coefficient sequence c1, ..., cn recurs while the data sequence a1, ..., an is fixed, where correlation coefficient sequences {cj}, {dj},..., {zj} always vary while the data sequence a1, ..., an is fixed and so forth.
On condition that there is a part in which a succession of the same coefficients exists in the correlation coefficient sequence, the invention is effectively applicable to any one of the above-described cases.
As set forth above in detail, it has been arranged to decrease the number of calculations according to this embodiment of the invention by paying attention to the fact that the continuous correlation coefficient sequence exists. Although the initial calculation and the last calculation of the correlation coefficient sequence have to be carried out at all times, the coefficient sequence is generally long enough to bring out some effect. The method according to this embodiment of the invention ensures that the number of calculations can be decreased except for a case where a completely alternate correlation coefficient sequence exists like 1, 0, 1, 0, ... or 0, 1, 0, 1,..., whereby the power consumption of the sliding correlator can be reduced.

Although a detailed description has been given of the sliding correlator and the sliding correlation method according to the invention, the invention is not limited to the above-described embodiments but may be modified and changed in various manners without departing from the spirit and scope thereof.

Possibility of Industrial Utilization

As set forth above, as it has been arranged to decrease the number of calculations according to the invention by paying attention to the fact that the continuous correlation coefficient sequence exists to ensure that the number of calculations is decreased, the integrating power consumption of the sliding correlator can be reduced.

## Claims

**1.** A sliding correlator in a spread spectrum receiving apparatus, comprising:

arithmetic device for calculating a correlation value between a data sequence and a correlation coefficient sequence,
and decision device for deciding whether a succession of the same coefficients exists in the correlation coefficient sequence, wherein the arithmetic device carries out a calculation in accordance with the result of decision made by the decision device.

**2.** A sliding correlator according to claim 1, wherein the arithmetic device carries out a calculation by utilizing the result of the preceding calculation.

**3.** A sliding correlator according to either claim 1 or claim 2, wherein in case where the succession of the same coefficients is decided to exist in the correlation coefficient sequence by the decision device, the arithmetic device does not carry out the calculation of the part in which the succession of the same coefficients exists in the correlation coefficient sequence whereby to decrease the number of calculations.

**4.** A slicing correlator according to one of claims 1 to 3, wherein the arithmetic device makes the data sequence a fixed data sequence and loops the correlation coefficient sequence whereby to carry out a calculation.

**5.** A sliding correlator according to one of claims 1 to 4, wherein the decision device includes an exclusive OR that inputs each of the continuous coefficients and decides whether the adjoining coefficients are the same.

**6.** A sliding correlation method in a receiver in a spread spectrum communication system, comprising the steps of:

deciding whether a succession of the same coefficients exists in a correlation coefficient sequence, and
calculating a correlation value between a data sequence and a correlation coefficient sequence in accordance with the result of the decision.

**7.** A sliding correlation method according to claim 6, wherein the calculation of the correlation value is carried out by utilizing the result of the preceding calculation.

**8.** A sliding correlation method according to either claim 6 or claim 7, in case where the succession of the same coefficients is decided to exist in the correlation coefficient sequence in the calculation of the correlation value, the calculation of the part in which the succession of the same coefficients exists in the correlation coefficient sequence is not carried out whereby to decrease the number of calculations.

**9.** A sliding correlation method according to one of claims 6 to 8 includes making the data sequence a fixed data sequence and looping the correlation coefficient sequence whereby to calculate the correlation value.

FIG.1

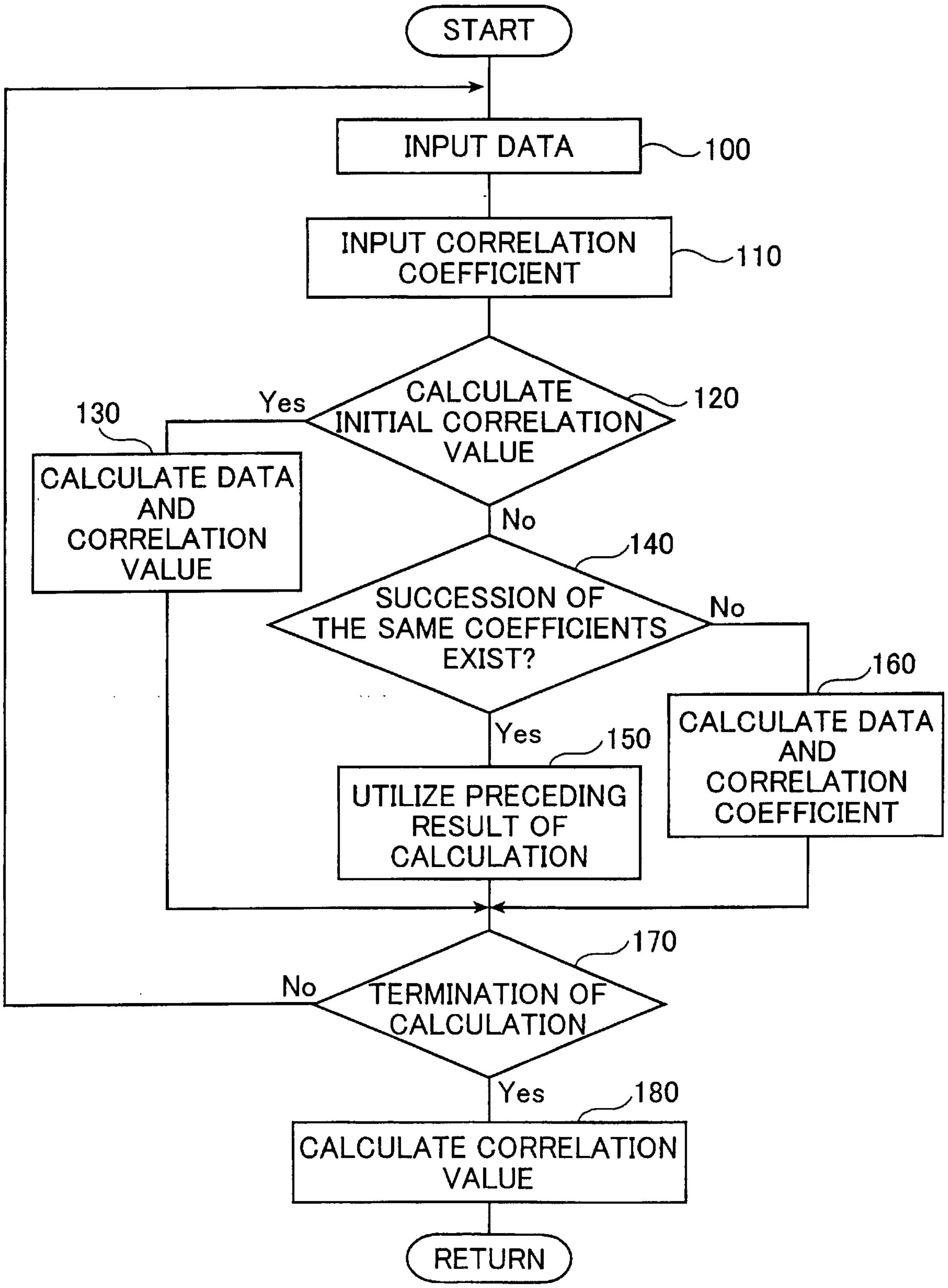
START
INPUT DATA
100
INPUT CORRELATION COEFFICIENT
110
CALCULATE INITIAL CORRELATION VALUE
120
Yes
130
CALCULATE DATA AND CORRELATION VALUE
No
140
SUCCESSION OF THE SAME COEFFICIENTS EXIST?
No
160
CALCULATE DATA AND CORRELATION COEFFICIENT
Yes
150
UTILIZE PRECEDING RESULT OF CALCULATION
170
No
TERMINATION OF CALCULATION
Yes
180
CALCULATE CORRELATION VALUE
RETURN

FIG.2

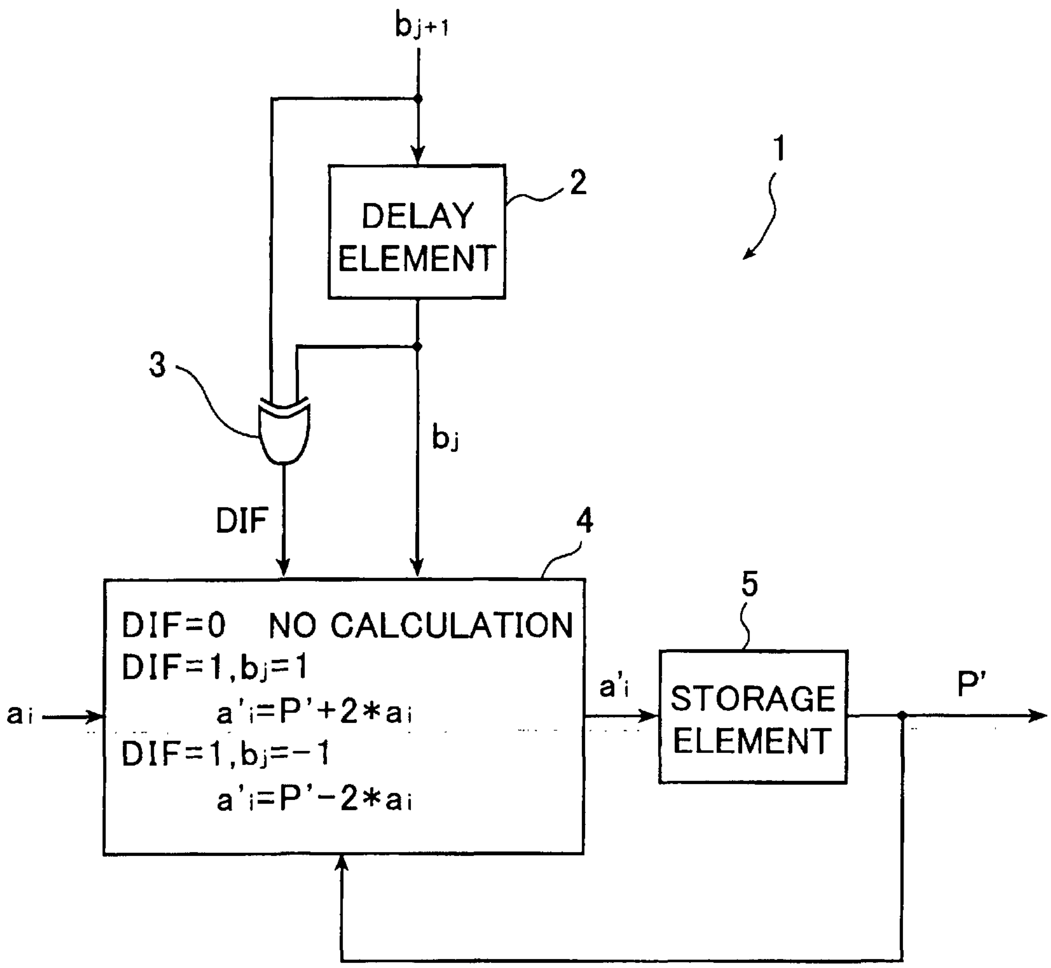

b j+1
1
2
DELAY ELEMENT
3
bj
DIF
4
5
DIF=0 NO CALCULATION
DIF=1, bj=1
a'i=P'+2*ai
DIF=1, bj=-1
a'i=P'-2*ai
ai
a'i
STORAGE ELEMENT
P'

FIG.3

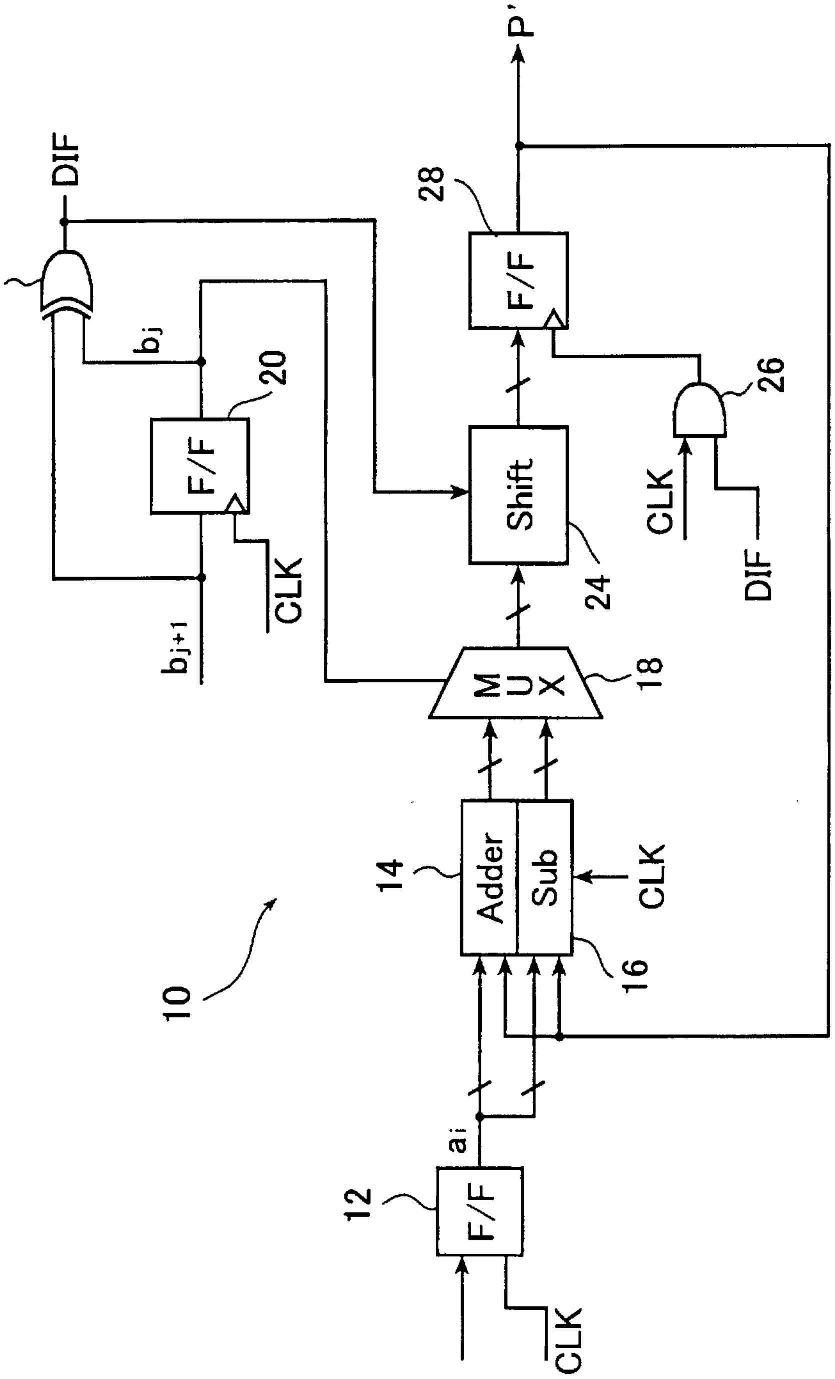
DIF
22
$b_j$
20
F/F
$b_{j+1}$
CLK
28
F/F
P'
Shift
24
26
CLK
DIF
MUX
18
Adder
Sub
14
16
CLK
10
12
F/F
$a_i$
CLK

FIG.4

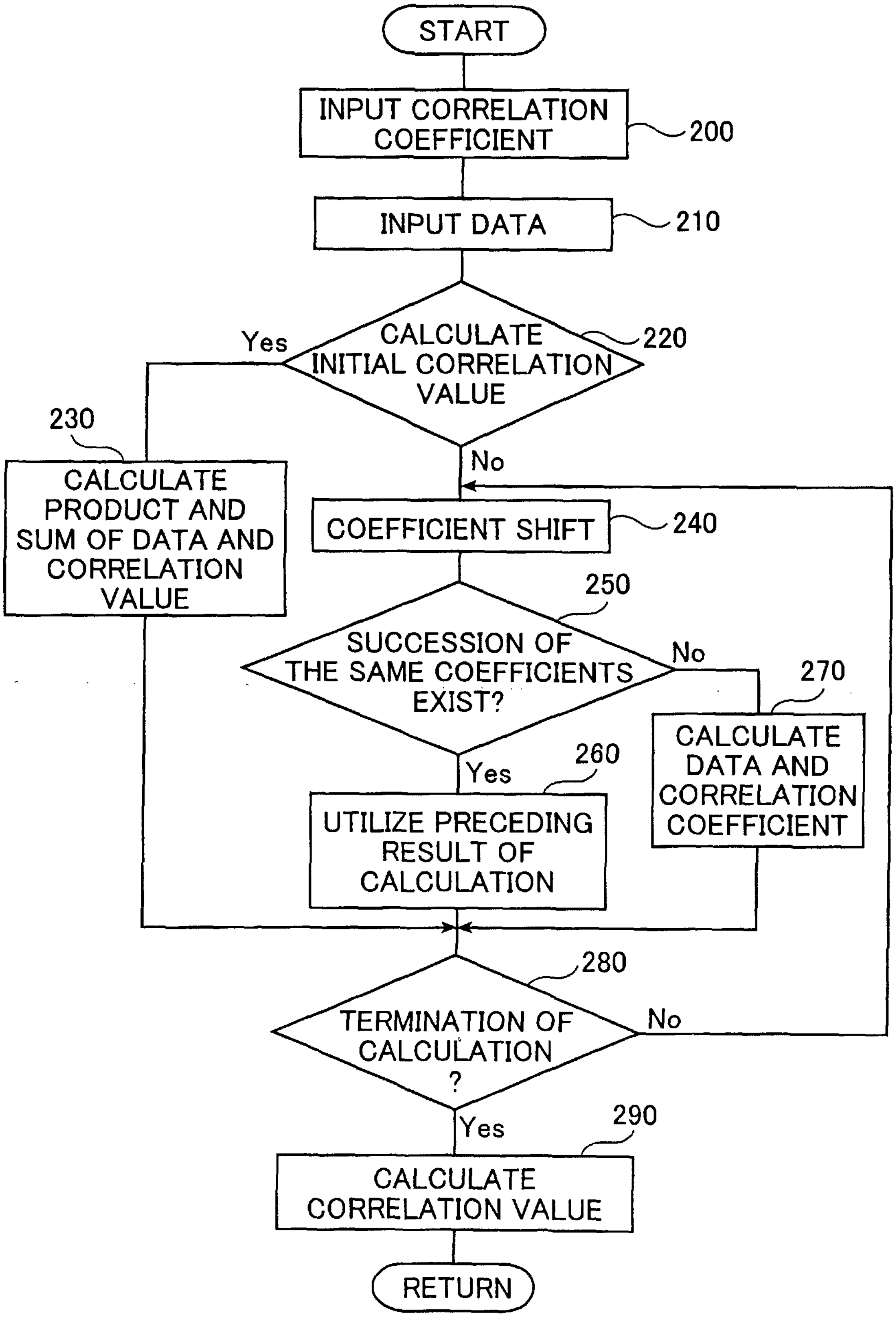
START
INPUT CORRELATION COEFFICIENT
200
INPUT DATA
210
CALCULATE INITIAL CORRELATION VALUE
220
Yes
No
230
CALCULATE PRODUCT AND SUM OF DATA AND CORRELATION VALUE
COEFFICIENT SHIFT
240
250
SUCCESSION OF THE SAME COEFFICIENTS EXIST?
No
270
CALCULATE DATA AND CORRELATION COEFFICIENT
Yes
260
UTILIZE PRECEDING RESULT OF CALCULATION
280
TERMINATION OF CALCULATION ?
No
Yes
290
CALCULATE CORRELATION VALUE
RETURN

FIG.5

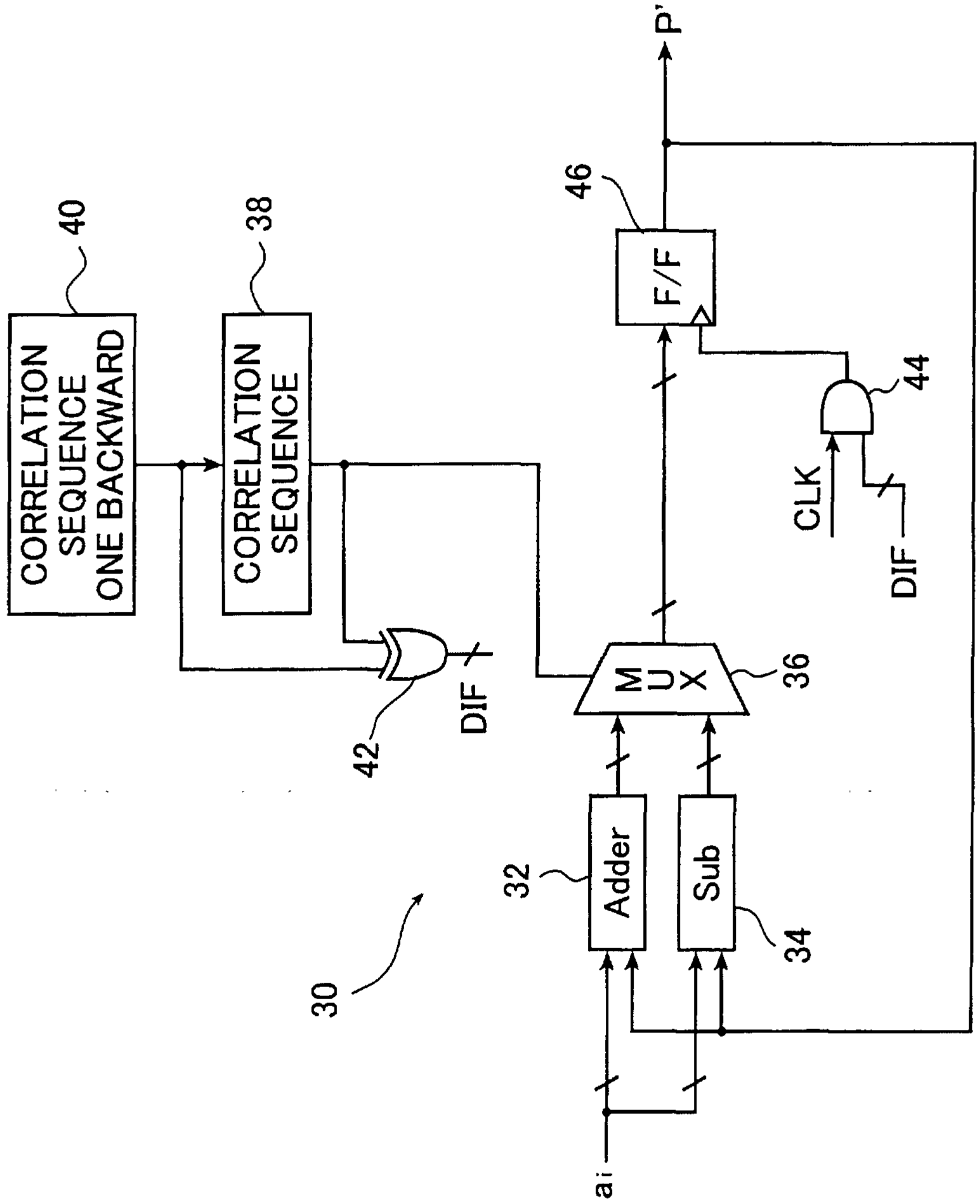
CORRELATION SEQUENCE ONE BACKWARD
40
CORRELATION SEQUENCE
38
42
DIF
MUX
36
F/F
46
P'
44
CLK
DIF
Adder
32
Sub
34
30
ai

FIG.6

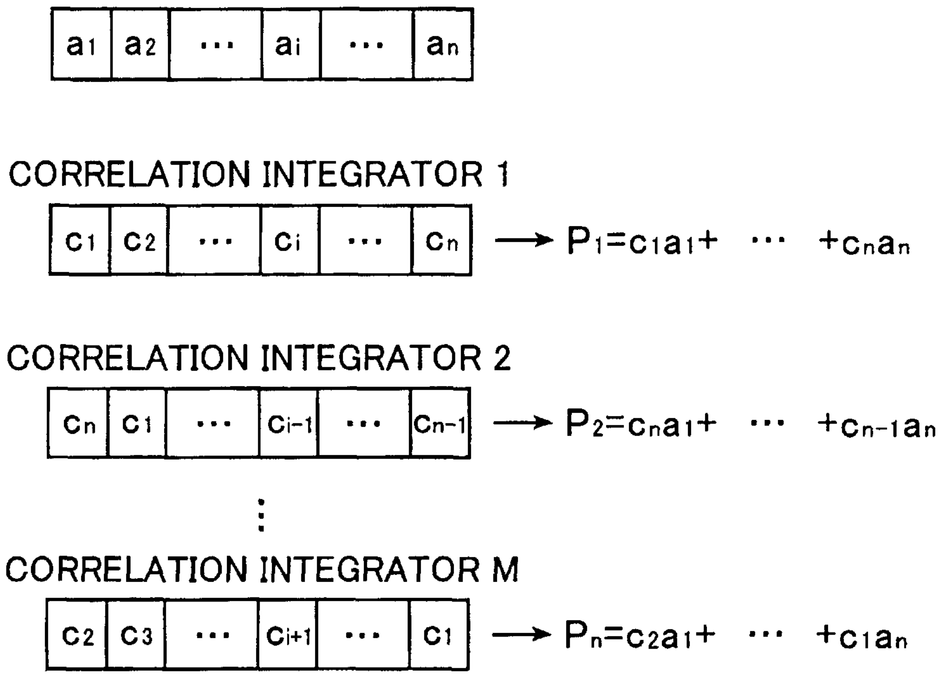
a1 a2 ··· ai ··· an
CORRELATION INTEGRATOR 1
c1 c2 ··· ci ··· cn
P1=c1a1+ ··· +cnan
CORRELATION INTEGRATOR 2
cn c1 ··· ci-1 ··· cn-1
P2=cna1+ ··· +cn-1an
CORRELATION INTEGRATOR M
c2 c3 ··· ci+1 ··· c1
Pn=c2a1+ ··· +c1an

FIG.7

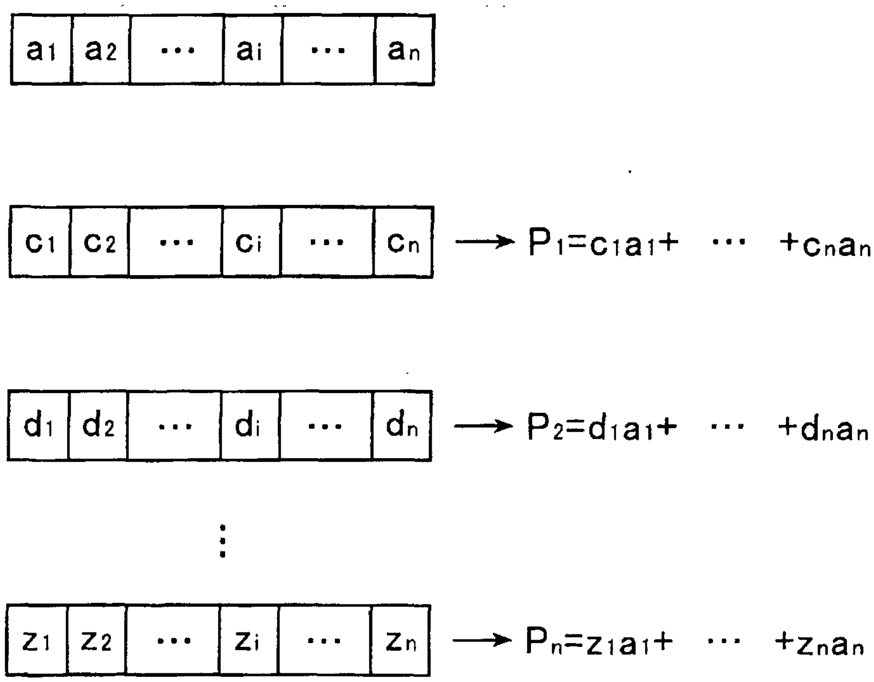
a1 a2 ··· ai ··· an
c1 c2 ··· ci ··· cn
P1=c1a1+ ··· +cnan
d1 d2 ··· di ··· dn
P2=d1a1+ ··· +dnan
z1 z2 ··· zi ··· zn
Pn=z1a1+ ··· +znan

FIG.8

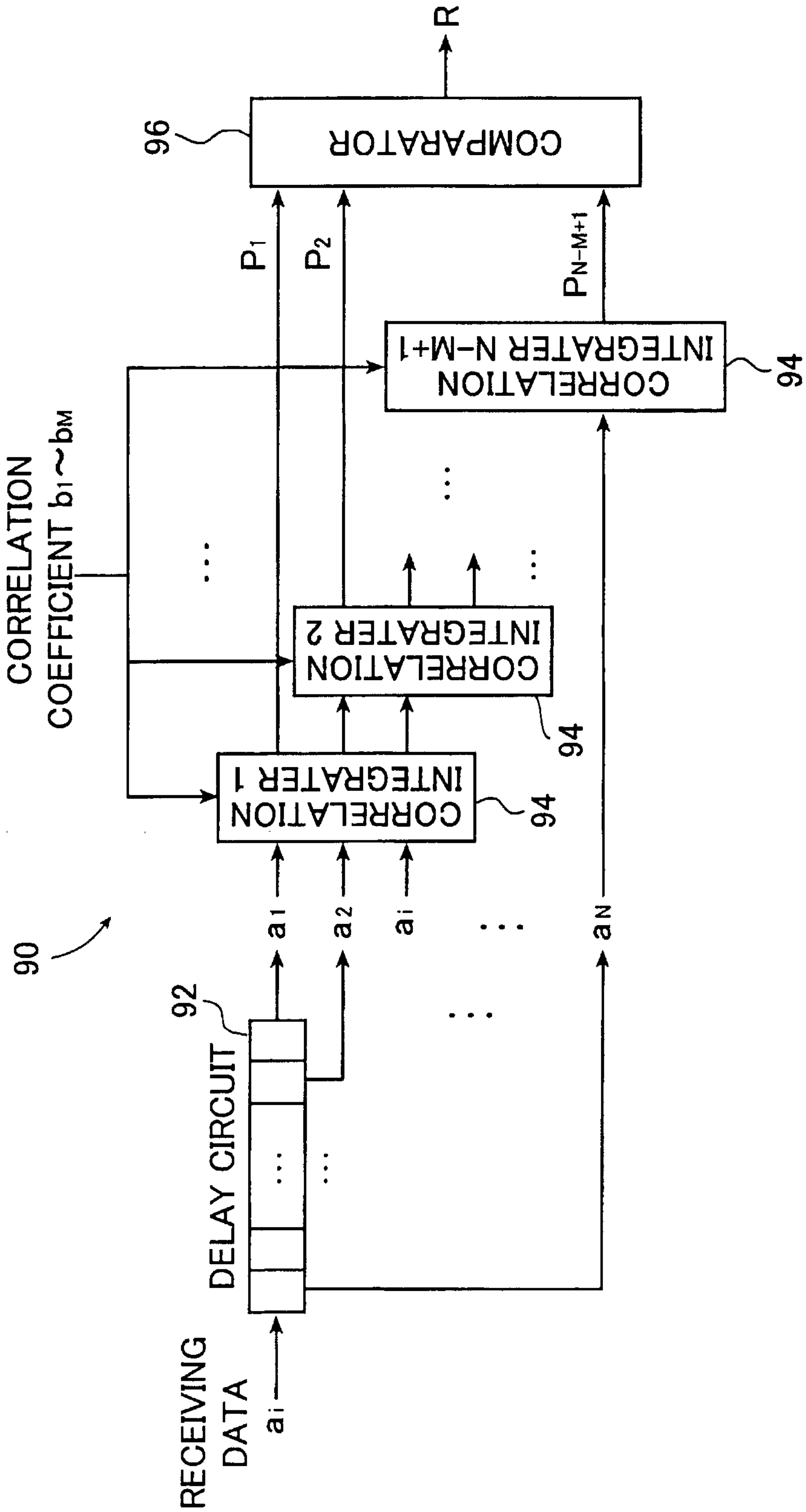
90
RECEIVING DATA
ai
DELAY CIRCUIT
92
a1
a2
ai
aN
CORRELATION COEFFICIENT b1~bM
CORRELATION INTEGRATER 1
CORRELATION INTEGRATER 2
CORRELATION INTEGRATER N−M+1
94
P1
P2
PN−M+1
COMPARATOR
96
R

FIG.9

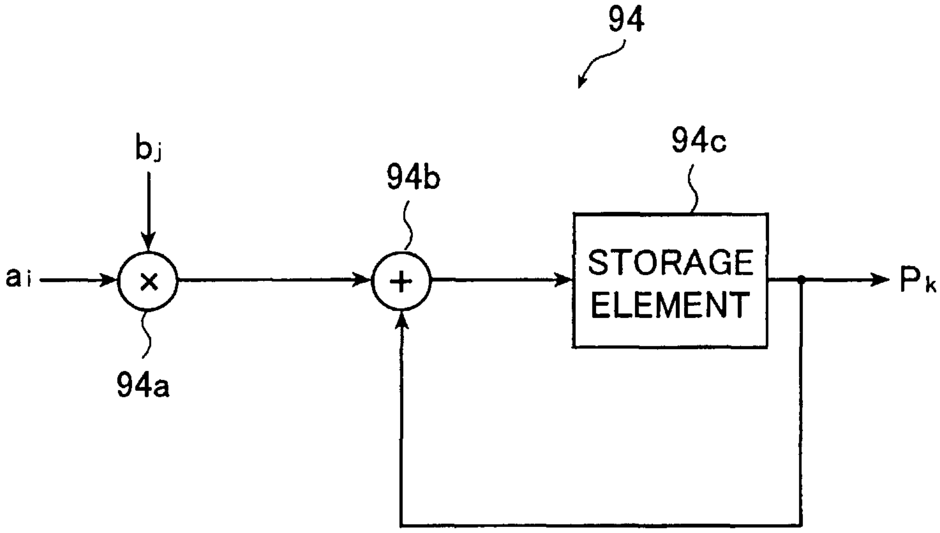

## INTERNATIONAL SEARCH REPORT

International application No.
PCT/JP01/01643

**A. CLASSIFICATION OF SUBJECT MATTER**
Int.Cl[7] H04B1/707, G06F17/15

According to International Patent Classification (IPC) or to both national classification and IPC

**B. FIELDS SEARCHED**

Minimum documentation searched (classification system followed by classification symbols)
Int.Cl[7] H04B1/69-1/713, H04J13/00-13/06, G06F17/15

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X<br>P,A | JP, 2000-278178, A (Matsushita Electric Ind. Co., Ltd.), 06 October, 2000 (06.10.00), Full text; Figs. 1 to 3 (Family: none) | 1,5,6,9<br>2-4,7,8 |
| A | JP, 11-41140, A (YRP Idou Tsushin Kiban Gijutsu Kenkyusho K.K.), 12 February, 1999 (12.02.99), Full text; all drawings (Family: none) | 1-9 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 May, 2001 (10.05.01) | 22 May, 2001 (22.05.01) |
| Name and mailing address of the ISA/<br>Japanese Patent Office | Authorized officer |
| Facsimile No. | Telephone No. |

Form PCT/ISA/210 (second sheet) (July 1992)